Europäisches Patentamt

European Patent Office

Office européen des brevets

(19)

(11) EP 1 394 536 A1

(12) EUROPEAN PATENT APPLICATION

(43) Date of publication:
03.03.2004 Bulletin 2004/10

(51) Int Cl.⁷: G01N 27/407

(21) Application number: 03019485.6

(22) Date of filing: 28.08.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 30.08.2002 JP 2002254065
30.08.2002 JP 2002254062
30.08.2002 JP 2002254066

(71) Applicant: Denso Corporation
Kariya-city, Aichi-pref., 448-8661 (JP)

(72) Inventor: Kojima, Takashi
Kariay-city, Aichi-pref. 448-8661 (JP)

(74) Representative:
Leson, Thomas Johannes Alois, Dipl.-Ing.
Tiedtke-Bühling-Kinne & Partner GbR,
TBK-Patent,
Bavariaring 4
80336 München (DE)

(54) **Gas sensor and structure of electric connector**

(57) An improved structure of a gas sensor is provided which is designed to establish firm electric connections between electrode terminals formed on opposed major surfaces of a sensor element and lead wires leading to an external device through a connector. The connector includes terminal connecting springs and holding members working to clamp the sensor element through the terminal connecting springs elastically to establish elastic contact of the terminal connecting springs with the electrode terminals of the sensor element. This structure is easy to manufacture and secures firm electrical connections between the terminal connecting springs and the electrode terminals.

FIG. 1

EP 1 394 536 A1

# EP 1 394 536 A1

**Description**

BACKGROUND OF THE INVENTION

1 Technical Field of the Invention

The present invention relates generally to a gas sensor which may be employed in burning control of automotive engines, and more particularly to a such gas sensor equipped with an electric connector designed to ensure electric connections between a sensor element and lead wires leading to an external device.

2 Background Art

Gas sensors equipped with a sensor element such as an oxygen sensor as taught in Japanese Utility Model Second Publication No. 8-1493 are known for use in burning control of fuel in internal combustion engines of modern automotive vehicles. Gas sensors of this type generally have disposed therein a connector establishing electrical connections between lead wires leading to an external controller and electrodes provided on the sensor element for use in picking up a sensor output and supplying the power to a heater provided on the sensor element. For instance, the connector is made up of terminal connecting conductors making electrical connections between the lead wires and terminals leading to the electrodes of the sensor element and a holder retaining therein the terminal connecting conductors.

Connectors which are easy to manufacture and designed to retain the terminal connecting conductors firmly to ensure the electrical connections between the lead wires and the terminals of the sensor element are sought.

SUMMARY OF THE INVENTION

It is therefore an object of the invention to provide an improved structure of a gas sensor constructed to secure electric connections between electrode terminals of a sensor element and lead wires leading to an external device such as a controller and to be manufactured easily.

According to one aspect of the invention, there is provided a gas sensor which comprises: (a) a sensor element having a length and electrical terminals formed on an end portion thereof; and (b) a connector working to establish electrical connections between the electrical terminals of the sensor element and conductors extending from inside to outside the gas sensor. The connector includes terminal connecting members and at least two holding members. The holding members work to retain therein the terminal connecting members and the end of the sensor element to make the electrical connections between the electrical terminals of the sensor element and the conductors. The terminal connecting members and the holding members are so configured geometrically as to establish mechanical engagement therebetween.

In the preferred mode of the invention, each of the terminal connecting members has a protrusion. Each of the holding members has formed therein recesses within which the protrusions of the terminal connecting members are fitted to establish the mechanical engagement between the terminal connecting members and the holding members.

The protrusions of the terminal connecting members may be implemented by bends formed on lengths of the terminal connecting members, respectively.

The bends project perpendicular to the lengths of the terminal connecting members, respectively.

Each of the terminal connecting members may alternatively have a plurality of protrusions. Each of the holding members may have formed therein recesses within which the protrusions of the terminal connecting members are fitted to establish the mechanical engagement between the terminal connecting members and the holding members.

Each of the terminal connecting members is made up of a supporting portion, a bent portion, and an elastic contact portion placed in electrical contact with one of the electrical terminals of the sensor element. Each of the elastic contact portions continues from an end of the support portion through the bent portion and is turned at the bent portion toward the support portion. The support portion has the protrusion. The protrusion is located farther from the bent portion than the elastic contact portion .

According to the second aspect of the invention, there is provided a gas sensor which comprises: (a) a sensor element having a length and electrical terminals formed on an end portion thereof; (b) at least two holding members joined together to define a chamber therein; (c) terminal connecting spring members leading to conductors extending from inside to outside the gas sensor, the terminal connecting spring members being retained within the chamber of the holding members in electrical contact with the electrical terminals of the sensor element so as to add elastic pressures to the sensor element in a direction perpendicular to the length of the sensor element, respectively, to hold the end portion of the sensor element within the chamber of the holding members; and (d) a clamping spring mechanism disposed on an outer periphery of the holing members. The clamping spring mechanism works to add an elastic pres-

**EP 1 394 536 A1**

sure *F2* to the holding members to clamp the holding members together. The elastic pressure *F1* is lower than or equal to an elastic pressure *F2* that is a sum of the elastic pressures produced by the terminal connecting spring members. This ensures electrical contact of the terminal connecting spring members with the terminals of the sensor element.

In the preferred mode of the invention, the clamping spring mechanism is made up of at least two springs fitted on the holding members.

If a plane is defined which extends along the length of the sensor element, a vector of the elastic pressure *F1* and a vector of the elastic pressure *F2* have the same position on the plane.

According to the third aspect of the invention, there is provided a gas sensor which comprises: (a) a plate-shaped sensor element having a length and electrical terminals formed on an end portion thereof; (b) terminal connecting spring members leading to conductors extending from inside to outside the gas sensor, each of the terminal connecting members is made up of a supporting portion, an elastic contact portion, and a bent portion connecting between the supporting portion and the elastic contact portion, the bent portion having one of substantially a U-shape and substantially a V-shape and directing the elastic contact portion toward the supporting portion so as to produce elasticity which allows the elastic contact portion to be deformed toward the supporting portion; and (c) at least two clamping members working to clamp the end portion of the gas sensor through the terminal connecting spring members so as to establish elastic contact of each of the terminal connecting spring members with one of the electrical terminals of the sensor element.

In the preferred mode of the invention, each of the terminal connecting spring members is made of one of a plate and a round bar.

A surface of each of the terminal connecting spring members is plated with gold.

Each of the elastic contact portion has a protrusion facing a corresponding one of the electrical terminals of the sensor element.

The gas sensor also includes a spring mechanism which produces an elastic pressure oriented perpendicular to the length of the gas sensor to clamp the clamping members together.

The spring mechanism may be made up of two or more springs.

The clamping members have electrical insulation properties.


BRIEF DESPCRIPTION OF THE DRAWINGS

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:

Fig. 1 is a longitudinal sectional view of a gas sensor according to the invention;
Fig. 2 is a transverse sectional view which shows an internal structure of an electric connector;
Fig. 3(a) is a plane view which shows one of a pair of clamping spring plates;
Fig. 3(b) is a side view of Fig. 3(a);
Fig. 4(a) is a plane view which shows a clamping spring plate of the type different from the one of Figs 3(a) and 3(b);
Fig. 4(b) is a side view of Fig. 4(a);
Fig. 5 is a partial plane view which shows terminal connecting strips establishing electrical contact with terminals of a sensor element;
Fig. 6(a) is a partial side view which shows a terminal connecting strip;
Fig. 6(b) is a partial side view which shows a terminal connecting strip of the type different from the one in Fig. 6(a);
Fig. 7 is a partially enlarged view which shows elastic contact between the terminal connecting strip of Fig. 6(b) and a gas sensor;
Fig. 8 is a plane view which shows an internal structure of a holding member;
Fig. 9 (a) is a vertical sectional view as taken along the line $\alpha$-$\alpha$ in Fig. 8;
Fig. 9(b) is a vertical sectional view as taken along the line *b-b* in Fig. 8;
Fig. 10 is a plane view which shows an outer structure of the holding member of Fig. 8;
Fig. 11(a) is a partial side view which shows a modified form of the terminal connecting strip of Fig. 6(a);
Fig. 11(b) is a plane view of Fig. 11(a);
Fig. 12 is a plane view which shows a modified form of the holding member of Fig. 8;
Fig. 13 is a partial side view which shows a modified form of the terminal connecting strip of Fig. 6(a);
Fig. 14(a) is a partial side view which shows a modified form of the terminal connecting strip of Fig. 6(a);
Fig. 14(b) is a plane view as viewed from a longitudinal direction of the terminal connecting strip of Fig. 14(a);
Fig. 15 is a graph which shows a calibration curve indicating a relation between a load applied to an elastic member and a resultant flexure;

3

Fig. 16 is an explanatory view which shows flexture of a clamping spring plate;

Fig. 17 is an explanatory view which shows flexture of a terminal connecting strip;

Fig. 18 is a plane view for explaining how to determine an elastic pressure produced in a case where holding members are clamped only by one clamping spring plate;

Fig. 19 is a plane view for explaining how to determine an elastic pressure produced in a case where holding members are clamped by two clamping spring plates;

Fig. 20 is an explanatory view for explaining how to determine an elastic pressure produced by terminal connecting strips; and

Fig. 21 is an explanatory view which shows location where elastic pressures produced by terminal connecting strips and clamping spring plates act.

DESCRIPTION OF THE PREFERRED EMBODIMENTS

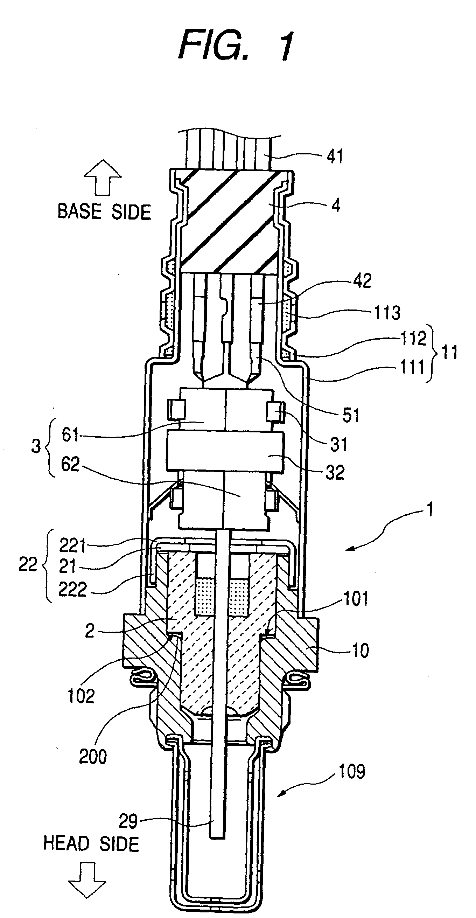

Referring to the drawings, wherein like reference numbers refer to like parts in several views, particularly to Fig. 1, there is shown a gas sensor 1 according to the invention which may be employed in a burning control system for automotive vehicles to measure concentrations of components such as NOx, CO, HC, $O_2$ contained in exhaust gasses of the engine.

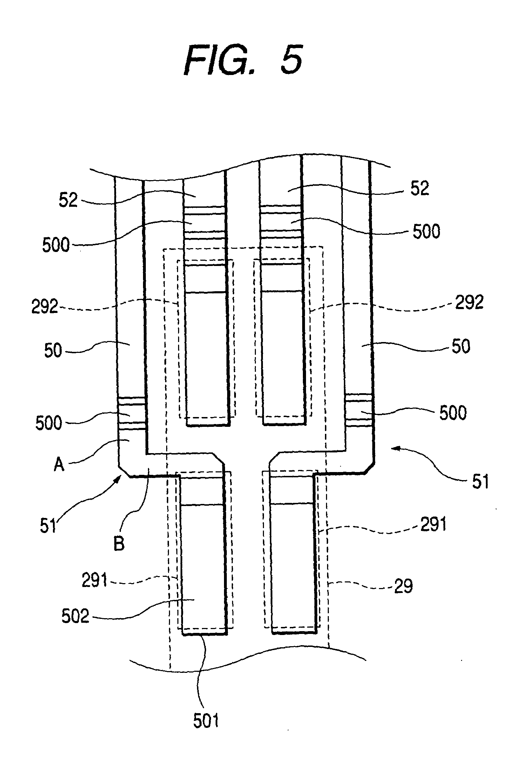

The gas sensor 1 includes a sensor element 29 with two opposed major surfaces, as clearly shown in Fig. 5, each having four terminals 291 and 292 affixed thereto (i.e., a total of eight terminals). The gas sensor 1 also includes an electrical connector consisting of electrical terminal connecting strips 51 and 52 and holding members 61 and 62 working as a clamper, as will be described later in detail, to clamp the sensor element 29 through the terminal connecting strips 51 and 52. The terminal connecting strips 51 and 52 work to connect through electric connectors 41 the terminals 291 and 292 with lead wires 41 extending from outside to inside the gas sensor 1 through an elastic insulator 4.

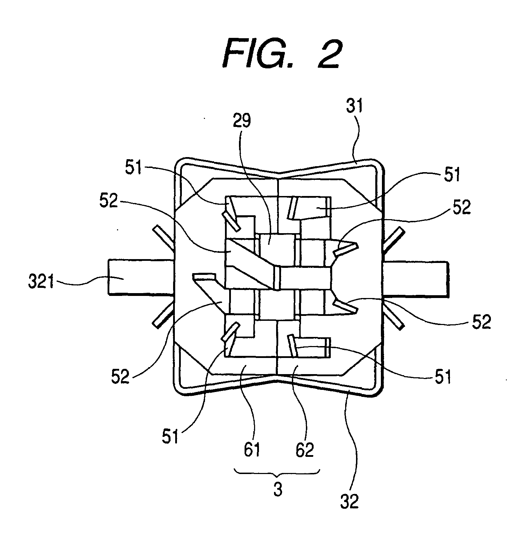

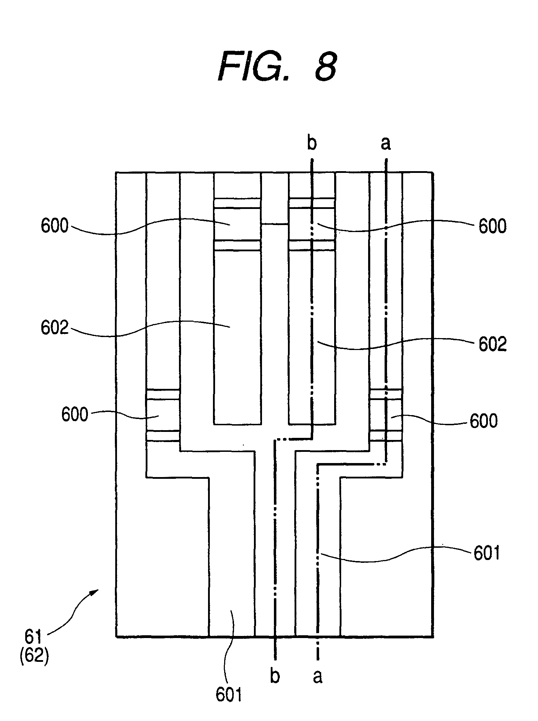

Each of the terminal connecting strips 51 and 52, as shown in Figs. 5 to 7, has a locking protrusion 500 facing the holding members 61 and 62, as shown in Figs. 1 and 2. Each of the holding members 61 and 62, as clearly shown in Fig. 8, has formed in a surface facing the terminal connecting strips 51 and 52 recesses 600 in which the locking protrusions 500 are to be fitted or locked.

The gas sensor 1 is designed to be installed in an exhaust pipe of an automotive engine to measure the concentration of $O_2$ and NOx to determine the air-fuel ratio of a mixture within a combustion chamber of the engine.

The sensor element 29 is made of a typical laminated ceramic plate which has a monitor cell working to monitor the concentration of oxygen within a gas chamber defined in the laminated ceramic plate, an oxygen pump cell working to regulate the concentration of oxygen within the gas chamber, and a sensor cell working to measure the concentration of NOx within the gas chamber. The ceramic plate also includes a heater which heats the ceramic plate up to a temperature required to be sensitive to gases to be measured correctly. Gas sensors of this type are well known in the art, and structure and operation thereof in detail will be omitted here.

The heater and the cells are joined electrically to an external controller (not shown) through the terminals 291 and 292 mounted on end portions of the side surfaces of the sensor element 29. Specifically, electric power and voltage are inputted to the heater and each cell through the terminals 291 and 292. Additionally, outputs of each cell is picked up by the controller through the terminals 291 and 292.

The gas sensor 1 has, as described above, the three cells and the one heater and thus needs the eight terminals 291 and 292 in total for supplying the power to the heater and transmitting outputs of the cells to the external controller. The terminals 291 and 292 are coupled electrically to the lead wires 41 through the connectors 42 and the terminal connecting strips 51 and 52, respectively.

The sensor element 29, as clearly shown in Figs. 2 and 5, has the total of the four terminals 291 and 292 affixed to each of the opposed major surfaces. The total of the four electrical terminal connecting strips 51 and 52 are, thus, arrayed at each side of the sensor element 29. Fig. 1 is a longitudinal sectional view of the gas sensor 1 and does not show all of the lead wires 41 for the brevity of illustration.

The gas sensor 1, as shown in Fig. 1, also includes a hollow cylindrical metallic housing 10, a double-walled protective cover assembly 109 made up of an outer and an inner cover, and an air cover assembly 11. The protective cover assembly 109 is installed on a head of the housing 10 to define a gas chamber into which gases to be measured are admitted through gas holes formed in the outer and inner covers. The air cover assembly 11 is made up of a first cover 111 and a second cover 112. The first cover 111 has an upper small-diameter portion, as viewed in the drawing, and an open end thereof stacked to the housing 10. The second cover 112 is installed on the periphery of the small-diameter portion of the first cover 111 and crimped to retain a water-repellent filter 113 around the small-diameter portion of the first cover 111.

A ceramic-made insulation porcelain 2 is retained within the housing 10. The insulation porcelain 2 has a tapered shoulder 102. The housing 10 has an inner shoulder 101 tapering off to the cover assembly 109. The shoulder 102 of the insulation porcelain 2 is placed on the inner shoulder 101 of the housing 10 through a metallic packing ring 200 in an air-tight fashion.

A disc spring 21 is mounted on an upper end, as viewed in Fig. 1, of the insulation porcelain 2. A press assembly 22 is fitted over the upper end of the insulation porcelain 2 through the disc spring 21. The press assembly 22 is made up of a press plate 221 and an annular leg 222 extending vertically from the periphery of the press plate 221. The leg 222 is, for example, press fit over the periphery of the insulation porcelain 2 and retains the press plate 221 tightly so as to press the disc spring 21 elastically to apply an elastic pressure to the insulation porcelain 2, so that the insulation porcelain 2 is installed within the housing 10 in the air-tight fashion.

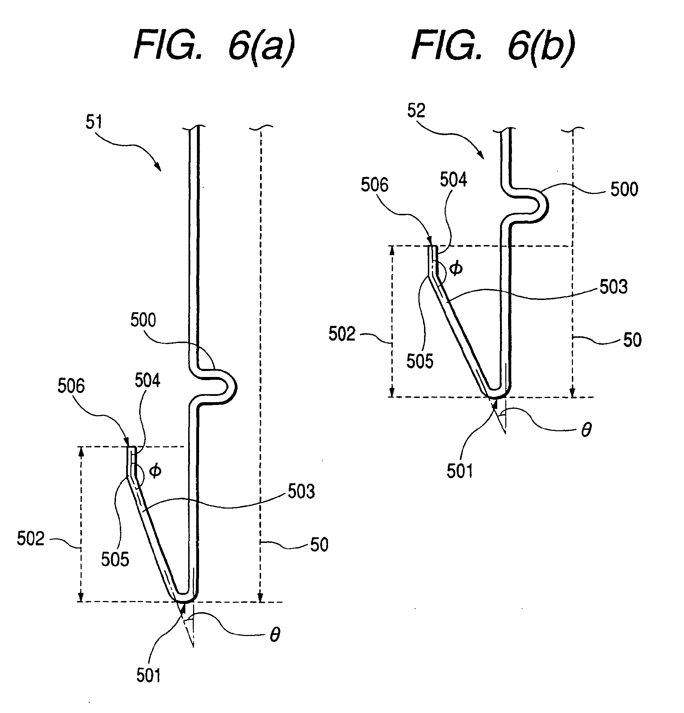

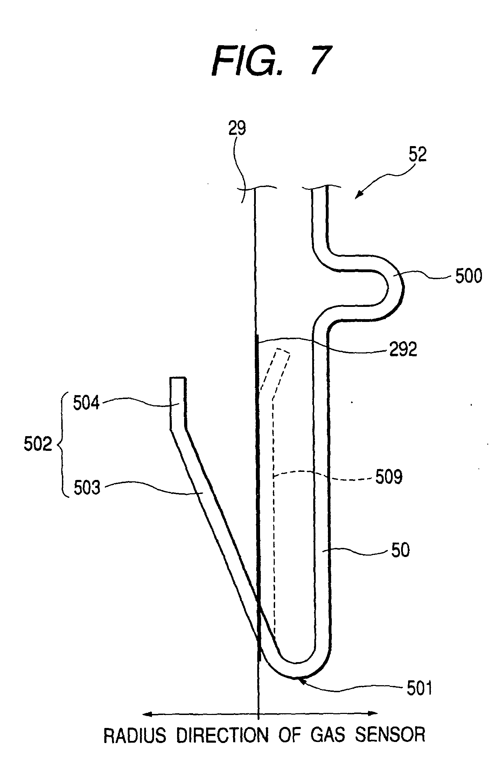

Each of the terminal connecting strips 51 and 52, as shown in Figs. 6(a) and 6(b), includes a support 50, an elastic contact 502, and a bend 501 which is of substantially a U-shape to provide elasticity to the elastic contact 502. The elastic contact 502 serves to make an electric contact with a corresponding one of the terminals 291 and 292. The holding members 61 and 62 are, as will be described below in detail, clamped together to elastically deform the elastic contacts 502 of the terminal connecting strips 51 and 52 toward the supports 50, as clearly shown in Fig. 7, to secure electric connections between the elastic contacts 502 and the terminals 291 and 292.

Two clamping spring plates 31 and 32, as shown in Fig. 2, are fitted over outer peripheries of the holding members 61 and 62 elastically to provide an elastic pressure thereto in a radius direction of the gas sensor 1 (i.e., a direction perpendicular to the length of the sensor element 29). The holding members 61 and 62 are each made up of an insulating ceramic material and form an air-side insulation porcelain 3 which works to establish electric insulation between the terminal connecting strips 51 and 52.

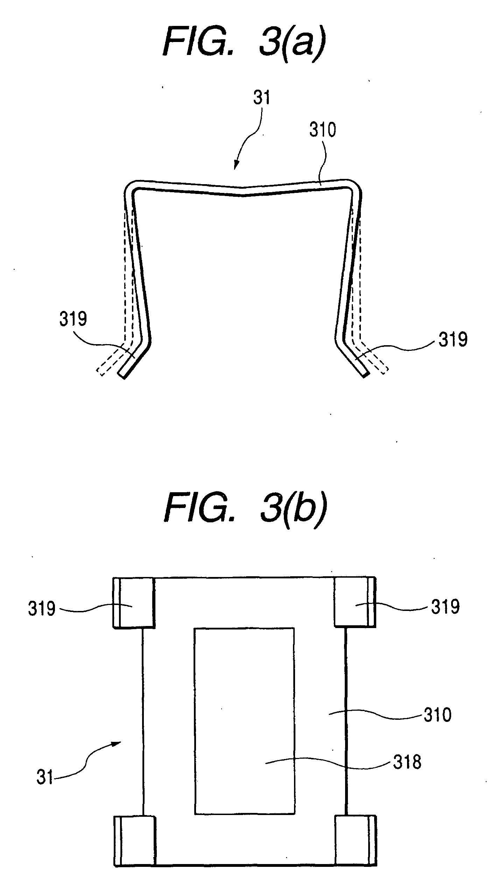

The clamping spring plate 31 is, as clearly shown in Figs. 3(a) and 3(b), made up of a rectangular plate 310 and legs 319. The plate 310 is curved slightly outward and has formed in a central portion thereof an opening 318 for saving weight and increasing flexibility thereof. The legs 319 extend substantially perpendicular to the plate 310 from four corners thereof in the form of a C-shape, as shown in Fig. 3(a). An end of each of the legs 319 is bent outward.

A solid line in Fig. 3(a) indicates the profile of the legs 319 before the clamping spring plate 31 is fitted on the holding members 61 and 62. A broken line indicates the profile of the legs 319 after the clamping spring plate 31 is fitted on the holding members 61 and 62 to elastically couple them together, as shown in Fig. 2.

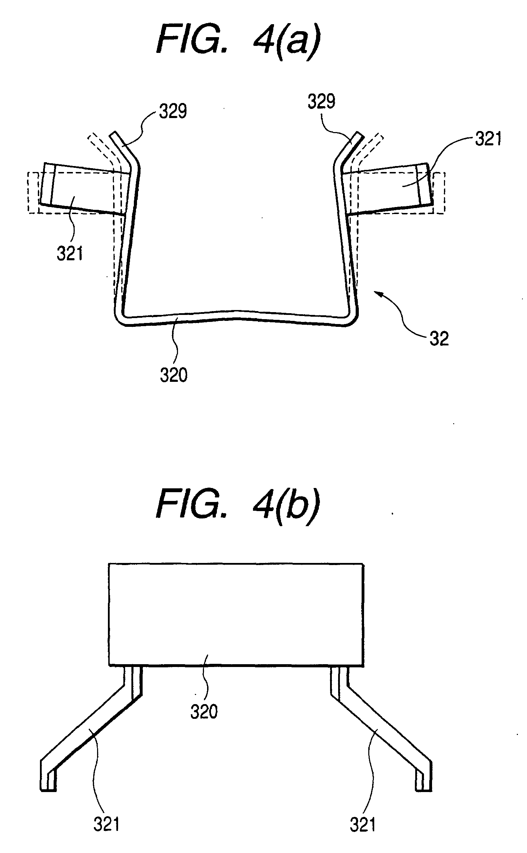

The clamping spring plate 32 is, as clearly shown in Figs. 4(a) and 4(b), made up of a rectangular plate 320 and a pair of legs 329. The legs 329 extend from sides of the plate 320 and serve to couple the holding members 61 and 62 together elastically. An end of each of the legs 329 is bent outward. The clamping spring plate 32 also includes a pair of anchoring legs 321 which extend, as clearly shown in Figs. 4(b) and 1, from the legs 329 so as to establish elastic engagement with an inner wall of the first cover 111 of the air cover assembly 11, thereby anchoring the holding members 61 and 62 within the first cover 111.

A solid line in Fig. 4(a) indicates the profile of the legs 329 before the clamping spring plate 32 is fitted on the holding members 61 and 62. A broken line indicates the profile of the legs 329 after the clamping spring plate 32 is fitted on the holding members 61 and 62 to elastically couple them together, as shown in Fig. 2.

Each of the terminal connecting strips 51 and 52 is, as shown in Figs. 5 to 7, made up of the support 50, the locking protrusion 500 formed on the support 50, the elastic contact 502, and the bend 501 formed between the support 50 and the elastic contact 502.

The support 50 of the terminal connecting strip 52, as shown in Figs. 5 and 6(b), extends straight in parallel to a length of the sensor element 29 and ends at the bend 501. The elastic contact 502 is bent in a direction opposite a direction in which the locking protrusion 500 bulges out at an angle θ to the support 50 and extends toward the base side, as shown in Fig. 1, of the gas sensor 1.

The support 50 of the terminal connecting strip 51, as shown in Figs. 5 and 6(a), includes a vertical portion A extending in parallel to the length of the sensor element 29 and an L-shaped portion B extending at right angles to the vertical portion A and then straight in parallel to the vertical portion A. The L-shaped portion B leads to the elastic contact 502 through the bend 501. The bend angle θ between the support 50 and the elastic contact 502 is an acute angle.

Each of the elastic contacts 502 has, as clearly shown in Figs. 6(a) and 6(b), a second bend 505 to define a first contact portion 503 between the first bend 501 and the second bend 505 and a second contact portion 504 between the second bend 505 and the end of the elastic contact 502. The angle φ which the second contact portion 504 makes with the first contact portion 503 is an obtuse angle.

The terminal connecting strips 51 and 52 make, as shown in Figs. 5 and 7, electrical connections with the terminals 291 and 292 of the sensor element 29. Specifically, the terminal connecting strips 51 abut to the terminals 291, while the terminal connecting strips 51 abut to the terminals 292.

Each of the terminal connecting strips 51 and 52 is, as described above, urged elastically by the clamping spring plates 31 and 32 through the holding members 61 and 62 so that it is deformed, as indicated by a broken line in Fig. 7, in the radius direction of the gas sensor 1 to establish constant engagement with one of the terminals 291 and 292.

The terminal connecting strips 51 and 52 are different in distance to the terminals 291 and 292, but the above described elastic deformation thereof absorbs such a variation to secure the electrical connections to the terminals 291 and 292.

The holding members 61 and 62 are each made of an insulating ceramic material and joined to each other by the clamping spring plates 31 and 32 to form the air-side insulation porcelain 3 with a vertical extending chamber which is octagonal in cross section, as clearly shown in Fig. 2, and works to establish electric insulation between the terminal connecting strips 51 and 52. Fig. 2 illustrates the air-side insulation porcelain 3 as viewed from the base side of the gas sensor 1.

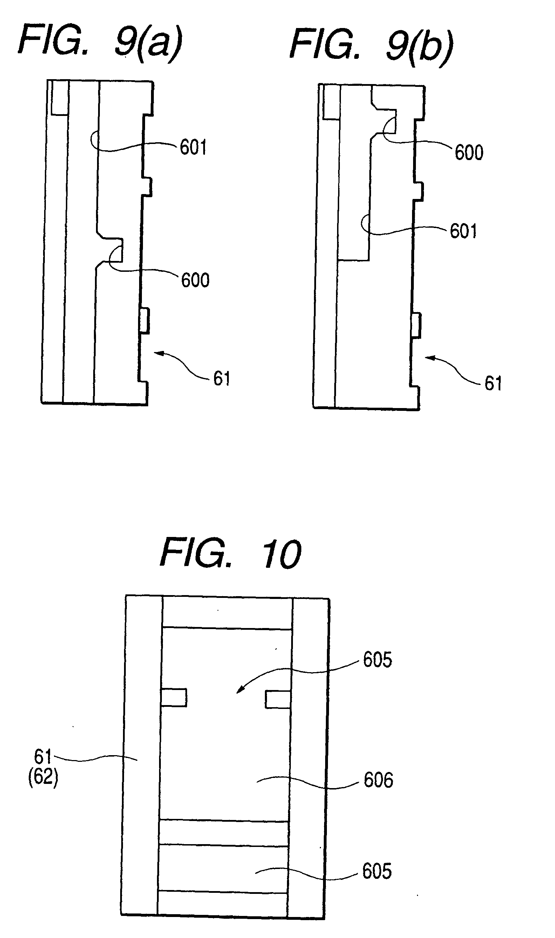

Fig. 8 shows an inside structure of the holding member 61 facing the terminal connecting strips 51 and 52. The holding member 61 has formed therein grooves 601 within which the terminal connecting strips 51 are to be disposed and grooves 602 within which the terminal connecting strips 52 are to be disposed. Fig. 9(a) is a sectional view of the holding member 61 as taken along the line *a-a* in Fig. 8. Fig. 9(b) is a sectional view of the holding member 62 as taken along the line *b-b* in Fig. 8.

The grooves 601 are similar in configuration to the supports 50 of the terminal connecting strips 51. The grooves 602 are similar in configuration to the supports 50 of the terminal connecting strips 52. Each of the grooves 601 and 602 has formed therein the recess 600 in which the locking protrusion 500 of a corresponding one of the terminal connecting strips 51 and 52 is to be fitted or locked.

The holding member 62 is identical in structure with the holding member 61, and explanation thereof in detail will be omitted here.

Each of the locking protrusions 500 of the terminal connecting strips 51 and 52 is, as clearly shown in Figs. 6(a) and 6(b), of a U-shape and located farther from the bend 501 than the end 506 of the elastic contact 502.

Fig. 10 shows an outer structure of the holding member 61 which has formed therein recesses 605 and 606 serving to hold the clamping spring plates 31 and 32 from moving undesirably. The clamping spring plate 31 is fitted within the recesses 605. The clamping spring plate 32 is fitted within the recess 606. The holding member 62 is identical in outer structure with the holding member 61, and explanation thereof in detail will be omitted here.

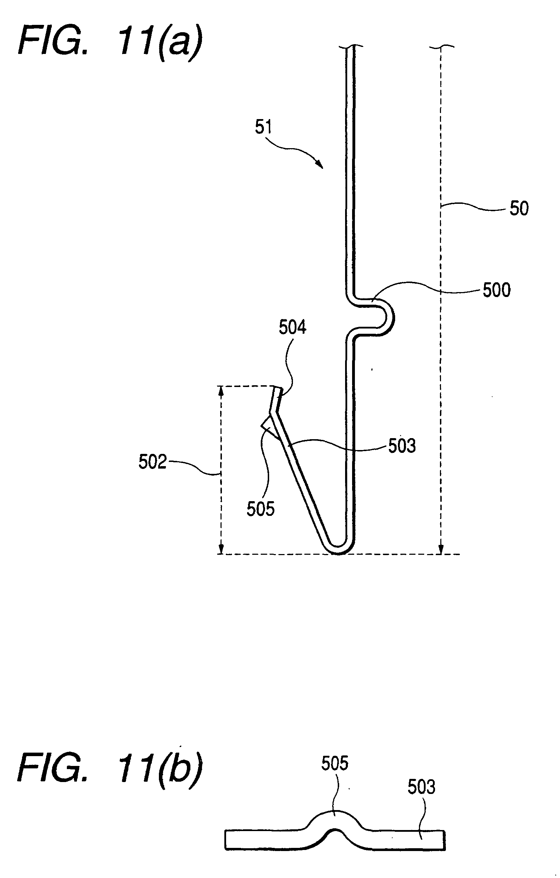

Each of the terminal connecting strips 51, as shown in Figs. 11(a) and 11(b), may also have a protrusion 505 which is formed on the first contact portion 503 of the elastic contact 501 by punching or pressing.

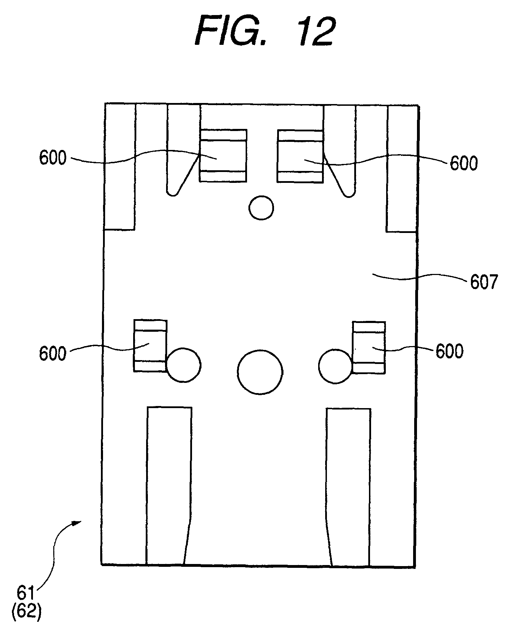

Each of the holding members 61 and 62 may alternatively have an inner structure, as illustrated in Fig. 12, which has a recess 607 configured to fit the terminal connecting strips 51 and 52 therewithin.

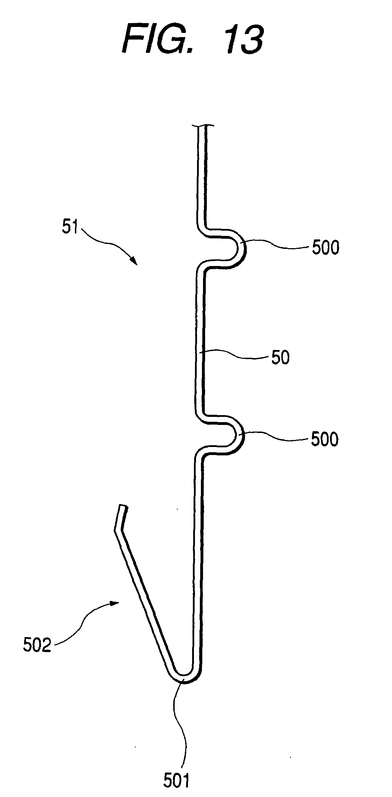

Each of the terminal connecting strips 51 and 52 may have, as shown in Fig. 13, two locking protrusions 500.

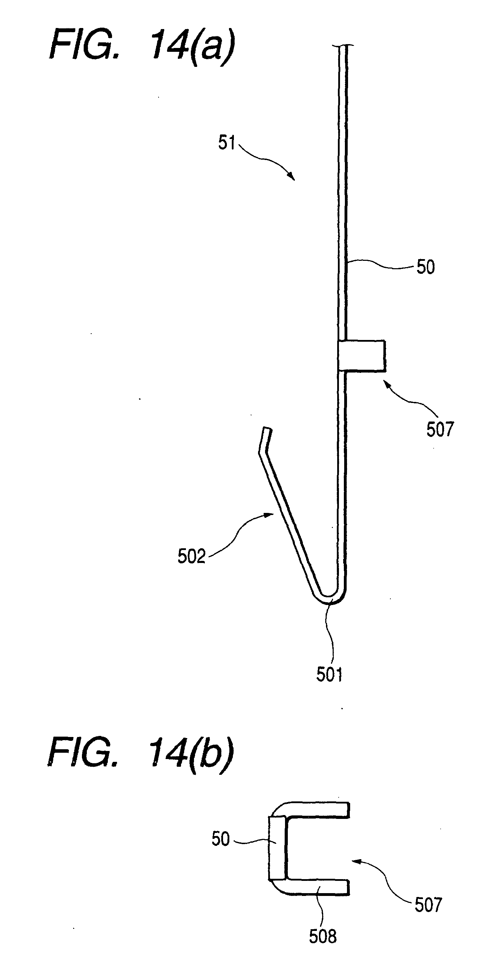

Each of the terminal connecting strips 51 and 52 may alternatively have, as shown in Figs. 14(a) and 14(b), a C-shaped locking member 507 which has a pair of strips 508 extending perpendicular to the length of the support 50 to establish tight engagement with the recess 600.

As apparent from the above discussion, the elastic contacts 502 of the terminal connecting strips 51 and 52 are configured to be deformable in the radius direction of the gas sensor 1 (i.e., the sensor element 29) and thus serve to secure electrical connections with the terminals 291 and 292 with aid of elastic pressure produced by the clamping spring plates 31 and 32. Additionally, an unwanted shift of the terminal connecting strips 51 and 52 in a lengthwise direction thereof is avoided by the engagement of the locking protrusions 500 with the recess 600 of the holding members 61 and 62.

The pressure *F1* produced by the terminal connecting strips 51 and 52 to hold or clamp the end portion of the sensor element 29 in a desired location and orientation within the air-side insulation porcelain 3 is lower than or equal to the pressure *F2* produced by the clamping spring plates 31 and 32 to clamp the holding members 61 and 62 (i.e., $F1 \leqq F2$) together.

The four terminal connecting strips 51 and 52 are, as described above, arrayed on each side of the sensor element 29 and urged by the clamping spring plates 31 and 32 to press the four terminals 291 and 292 elastically to retain the sensor element 29 within the air-side insulation porcelain 3. For instance, the pressure produced by each of the clamping spring plates 31 and 32 is more than or equal to one half of the pressure *F1* produced by all of the terminal connecting strips 51 and 52. Specifically, the pressure *F2* produced by the clamping spring plates 31 and 32 is set substantially equal to or higher than the pressure *F1*. This ensures electrical contact between each of the terminal connecting strips 51 and 52 and a corresponding one of the terminals 291 and 292 of the sensor element 29 without any clearances.

The pressures *F1* and *F2* may be determined in the following manner.

Usually, an elastic force is determined by measuring the degree of deformation of an elastic member, magnetostriction, piezo-electricity, or characteristic frequency of an ossilator, and comparing it with a calibration curve.

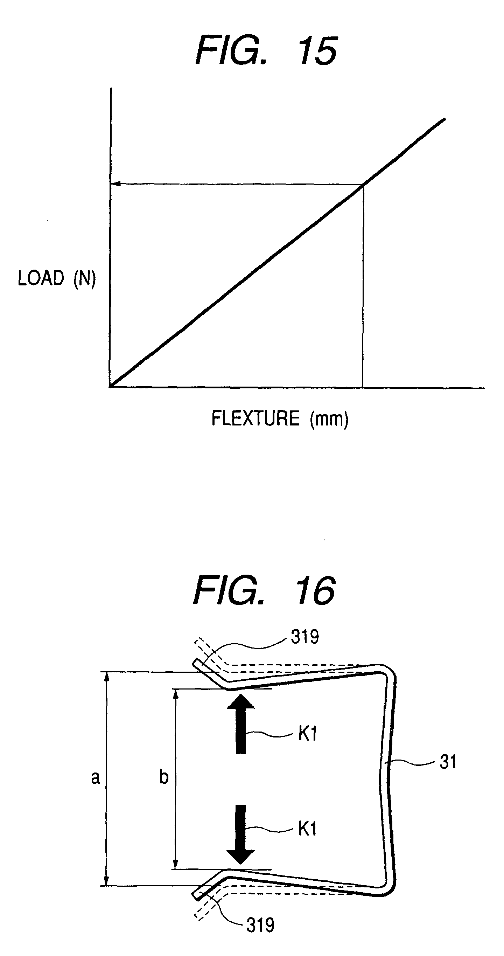

Fig. 15 shows an example of a calibration curve defined by a load applied to a spring and a resultant deflection or flexure of the spring measured actually. In the shown example, the load is in direct proportion to the flexure, but they may bear another relation depending upon the type of a spring.

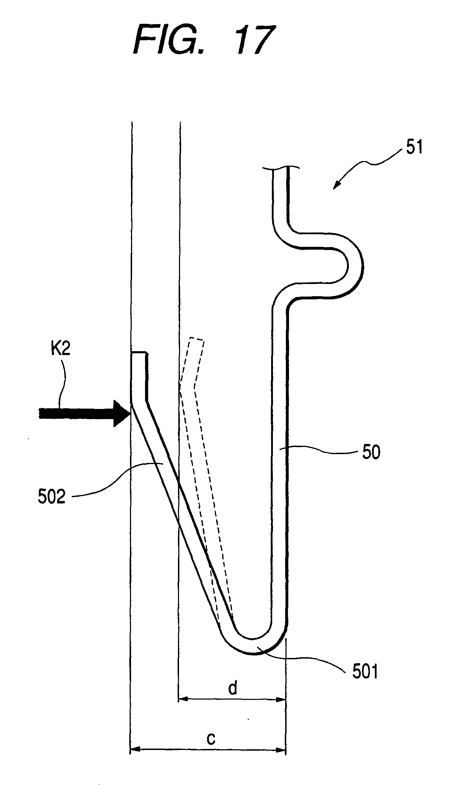

Each of the legs 319 of the clamping spring plate 31 takes a form, as indicated by a solid line in Fig. 16, when subjected to no loads. Application of load *K1* causes the legs 319 to be deflected outward, as indicated by broken lines. The degree of fluxture of the clamping spring plate 31 may be expressed by distance $\alpha$ minus distance $b$ (i.e., $a$-$b$). Therefore, the elastic pressure produced by the clamping spring plate 31 when clamping the holding members 61 and 62, as illustrated in Fig. 2, may be determined by measuring a load applied to the legs 319 and a resultant interval between the legs 319 (i.e., the distance $a$) to define a calibration curve, like the one in Fig. 15, and finding a load corresponding to the width of the assembly of the holding members 61 and 62 (i.e., the distance $a$ between the legs 319 after fitted on the holding members 61 and 62) minus the distance $b$ by look-up using the calibration curve. The elastic pressure produced by the clamping spring plate 32 may be determined in the same manner.

The elastic contact 502 of each of the terminal connecting strips 51 takes a form, as indicated by a solid line in Fig. 17, when subjected to no loads. Application of load $K2$ causes the elastic contact 502 to be deflected to the support 50, as indicated by a broken line. The degree of fluxture of the elastic contact 502 may be expressed by distance $c$ minus distance $d$ (i.e., $c$-$d$). Therefore, the elastic pressure produced by each of the terminal connecting strips 51 when urged by the clamping spring plates 31 and 32 through the holding members 61 and 62, as illustrated in Fig. 2, into constant engagement with one of the terminals 291 and 292 may be determined by measuring a load applied to the elastic contact 502 and a resultant displacement thereof (i.e., $c$-$d$) to define a calibration curve, and finding a load corresponding to the interval between the elastic contact 502 and the support 50 (i.e., the distance $c$) minus a clearance between the support 50 and a corresponding one of the terminals 291 and 292 after the terminal connecting strip 51 is installed within the holding members 61 and 62 (i.e., the distance $d$) by look-up using the calibration curve. The elastic pressure produced by the terminal connecting strips 52 may be determined in the same manner.

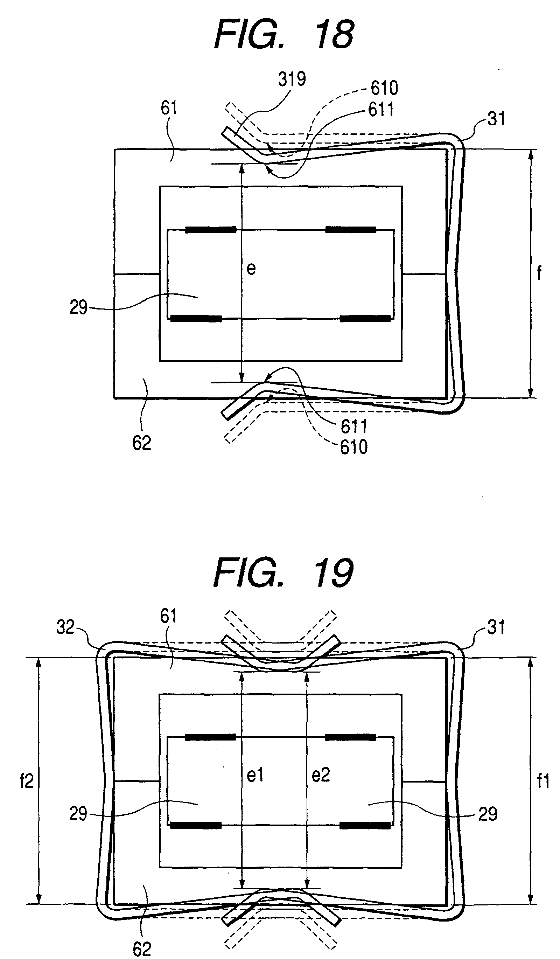

The manner in which the pressures $F1$ and $F2$ are determined will also be described below in more detail with reference to Figs. 18 to 20.

The holding members 61 and 62 may be clamped, as shown in Fig. 18, only by the clamping spring plate 31. The distance between innermost portions of the legs 319, that is, points 610 of contact with the outer surfaces of the holding members 61 and 62 after the clamping spring plate 31 is fitted on the holding members 61 and 62 is defined as $f$. The distance between the innermost portions 611 of the clamping spring plate 31 when the clamping spring plate 31 is not fitted on the holding members 61 and 62 is defined as $e$. The pressure produced by the clamping spring plate 31 may be determined as a function of the distance $f$ minus the distance $e$ by look-up using the calibration curve, as illustrated in Fig. 13. This pressure corresponds to the pressure $F2$ in a case where the holding members 61 and 62 are clamped only by the clamping spring plate 31. Each of the terminal connecting strips 51 and 52 is so selected that the pressure $F1$ produced by all of the terminal connecting strips 51 and 52 may be lower than the pressure $F2$ produced by the clamping spring plate 31.

Fig. 19 illustrates for a case where the holding members 61 and 61 are clamped using both the clamping spring plates 31 and 32.

The pressure produced by the clamping spring plate 31 may be determined based on the distance $f1$ minus the distance $e1$ in the same manner as described above. Similarly, the pressure produced by the clamping spring plate 32 may be determined based on the distance $f2$ minus the distance $e2$. The sum of these two pressures is equivalent to the pressure $F2$.

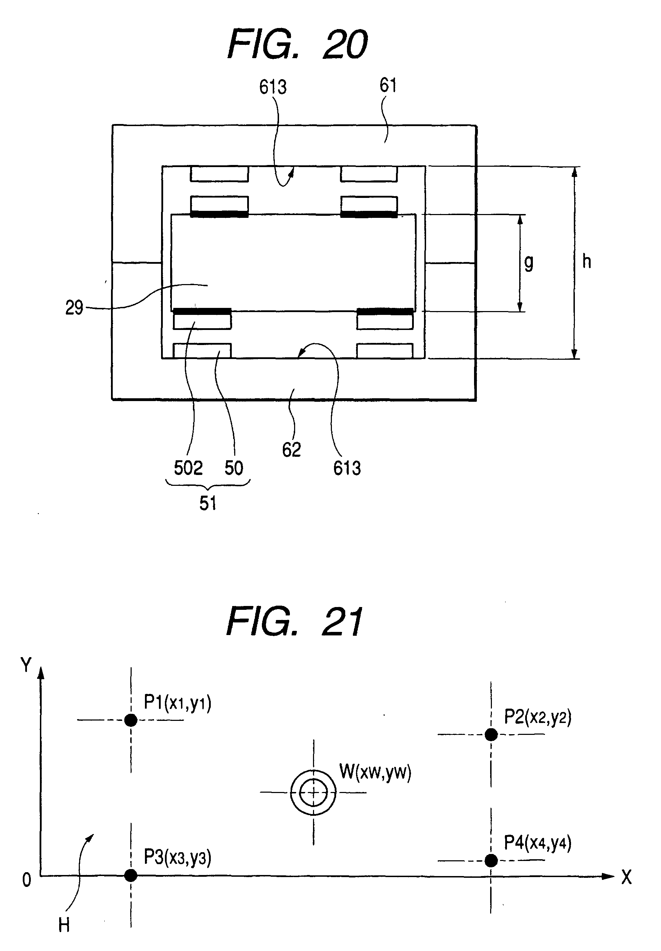

The sensor element 29 may be, as shown in Fig. 20, retained within the holding members 61 and 62 only by the terminal connecting strips 51. The distance $d$ between the support 50 and the elastic contact 502 after the connecting strips 51 are installed in the holding members 61 and 62 is given by dividing the distance $h$ between the inner walls 613 of the holding members 61 and 62 minus the thickness g of the sensor element 29 by two (i.e., $(h$-$d) / 2$). Thus, the elastic pressure produced by each of the terminal connecting strips 51 to hold the sensor element 29 in a desired position within the holding members 61 and 62 may be determined by look-up using the calibration curve, like the one of Fig. 15, based on the distance $c$ between the support 50 and the elastic contact 502 before the connecting strips 51 are installed minus the distance $d$.

The center of a total holding pressure given by the terminal connecting strips 51 and 52 (i.e., the pressure $F1$) and the center of a total clamping pressure given by the clamping spring plates 31 and 32 (i.e., the pressure $F2$) will be described below.

The sensor element 29 is rectangular in cross section and, as can be seen in Fig. 5, has the four terminals 291 and 292 on each of the opposed major surfaces. Four of the terminal connecting strips 51 and 52 are placed in contact with the terminals 291 and 292 on each of the surfaces of the sensor element 29.

A plane including one of the major surfaces of the sensor element 29 is, as shown in Fig. 21, defined as $H$. The origin $O$ is defined on any point on the plane $H$. Points on the plane H to which contacts between the elastic contacts 502 of the terminal connecting strips 51 and 52 and the terminals 291 and 292 of the sensor element 29 are projected are expressed by $x,y$ coordinates $(x1, y1), (x2, y2), (x3, y3)$, and $(x4, y4)$, respectively. The center of points on the plane H to which portions of the holding members 61 and 62 pressed by the legs 319 of the clamping spring plate 31 and the legs 329 of the clamping spring plate 32 are projected is expressed by $x,y$ coordinates $(xw, yw)$.

If pressures produced by the terminal connecting strips 51 and 52 acting on the points $(x1, y1), (x2, y2), (x3,$

*y3),* and *(x4, y4)* are defined as *P1, P2, P3,* and *P4* and a pressure produced by the clamping spring plates 31 and 32 acting on the point (xw, *yw)* is defined as *W(P1* to *P4* are vectors, and *W* is a vector sum of the pressures produced by the legs 319 of the clamping spring plate 31 and the legs 329 of the clamping spring plate 32), *x,y* coordinates *(Xp, Yp)* of the center (i.e., a vector sum) of the pressures *P1, P2, P3,* and *P4* (i.e., coordinates of the pressure *F1)* are given below.

$$Xp = (P1 \cdot x1 + P2 \cdot x2 + P3 \cdot x3 + P4 \cdot x4) / (P1 + P2 + P3 + P4)$$

$$Y_p = (P1 \cdot y1 + P2 \cdot y2 + P3 \cdot y3 + P4 \cdot y4) / (P1 + P2 + P3 + P4)$$

*X, Y* coordinates of the pressure *W*(i.e., the pressure *F2)* are, as apparent from the above, *xw* and *yw.*

In this embodiment, the pressures *F1* and *F2* are selected to be identical in position with each other. Thus, *Xp* = xw, and *Yp = yw.* The clamping spring plates 31 and 32 and the holding members 61 and 62 are so designed as to meet such relations.

The coordinates (*xw*, *yw*) of the pressure *W* may be determined using points on the plane *H* to which portions of the holding members 61 and 62 pressed by the clamping spring plates 31 and 32 are projected.

Each of the terminal connecting strips 51 and 52 is made of a plate member, but may alternatively be formed by a round bar member.

The surface of the terminal connecting strips 51 and 52 may be plated with gold.

The bend 501 of each of the terminal connecting strips 51 and 52 is of substantially a U-shape, but may have a substantially a V-shape.

The air-side insulation porcelain 3 consists of the two holding members 61 and 62, but may be made up of three or more parts.

The holding members 61 and 62 may also be clamped together by three or more springs.

While the present invention has been disclosed in terms of the preferred embodiments in order to facilitate better understanding thereof, it should be appreciated that the invention can be embodied in various ways without departing from the principle of the invention. Therefore, the invention should be understood to include all possible embodiments and modifications to the shown embodiments witch can be embodied without departing from the principle of the invention as set forth in the appended claims.

An improved structure of a gas sensor is provided which is designed to establish firm electric connections between electrode terminals formed on opposed major surfaces of a sensor element and lead wires leading to an external device through a connector. The connector includes terminal connecting springs and holding members working to clamp the sensor element through the terminal connecting springs elastically to establish elastic contact of the terminal connecting springs with the electrode terminals of the sensor element. This structure is easy to manufacture and secures firm electrical connections between the terminal connecting springs and the electrode terminals.

**Claims**

1.    A gas sensor comprising:

   a sensor element having a length and electrical terminals formed on an end portion thereof; and
   a connector working to establish electrical connections between the electrical terminals of said sensor element and conductors extending from inside to outside the gas sensor, said connector including terminal connecting members and at least two holding members, the holding members working to retain therein the terminal connecting members and the end of said sensor element to make the electrical connections between the electrical terminals of said sensor element and the conductors, the terminal connecting members and the holding members being so configured geometrically as to establish mechanical engagement therebetween.

2.    A gas sensor as set forth in claim 1, wherein each of the terminal connecting members has a protrusion, and each of the holding members has formed therein recesses within which the protrusions of the terminal connecting members are fitted to establish the mechanical engagement between the terminal connecting members and the holding members.

3.    A gas sensor as set forth in claim 2, wherein the protrusions of the terminal connecting members are bends formed on lengths of the terminal connecting members, respectively.

4. A gas sensor as set forth in claim 3, wherein the bends project perpendicular to the lengths of the terminal connecting members, respectively.

5. A gas sensor as set forth in claim 1, wherein each of the terminal connecting members has a plurality of protrusions, and each of the holding members has formed therein recesses within which the protrusions of the terminal connecting members are fitted to establish the mechanical engagement between the terminal connecting members and the holding members.

6. A gas sensor as set forth in claim 2, wherein each of the terminal connecting members is made up of a supporting portion, a bent portion, and an elastic contact portion placed in electrical contact with one of the electrical terminals of said sensor element, each of the elastic contact portions continuing from an end of the support portion through the bent portion and being turned at the bent portion toward the support portion, wherein the support portion has the protrusion, and wherein the protrusion is located farther from the bent portion than the elastic contact portion .

7. A gas sensor comprising:

a sensor element having a length and electrical terminals formed on an end portion thereof;
at least two holding members joined together to define a chamber therein;
terminal connecting spring members leading to conductors extending from inside to outside the gas sensor, said terminal connecting spring members being retained within the chamber of said holding members in electrical contact with the electrical terminals of said sensor element so as to add elastic pressures to said sensor element in a direction perpendicular to the length of said sensor element, respectively, to hold the end portion of said sensor element within the chamber of said holding members; and
a clamping spring mechanism disposed on an outer periphery of said holing members, said clamping spring mechanism working to add an elastic pressure $F2$ to said holding members to clamp said holding members together,

wherein the elastic pressure $F1$ *is* lower than or equal to an elastic pressure $F2$ that is a sum of the elastic pressures produced by said terminal connecting spring members.

8. A gas sensor as set forth in claim 7, wherein said clamping spring mechanism is made up of at least two springs fitted on said holding members.

9. A gas sensor as set forth in claim 7, wherein if a plane is defined which extends along the length of said sensor element, a vector of the elastic pressure $F1$ and a vector of the elastic pressure $F2$ have the same position on said plane.

10. A gas sensor comprising:

a plate-shaped sensor element having a length and electrical terminals formed on an end portion thereof;
terminal connecting spring members leading to conductors extending from inside to outside the gas sensor, each of said terminal connecting members is made up of a supporting portion, an elastic contact portion, and a bent portion connecting between the supporting portion and the elastic contact portion, the bent portion having one of substantially a U-shape and substantially a V-shape and directing the elastic contact portion toward the supporting portion so as to produce elasticity which allows the elastic contact portion to be deformed toward the supporting portion; and
at least two clamping members working to clamp the end portion of said gas sensor through said terminal connecting spring members so as to establish elastic contact of each of said terminal connecting spring members with one of the electrical terminals of said sensor element.

11. A gas sensor as set forth in claim 10, wherein each of said terminal connecting spring members is made of one of a plate and a round bar.

12. A gas sensor as set forth in claim 10, wherein a surface of each of said terminal connecting spring members is plated with gold.

13. A gas sensor as set forth in claim 10, wherein each of the elastic contact portion has a protrusion facing a corresponding one of the electrical terminals of said sensor element.

**14.** A gas sensor as set forth in claim 10, further comprising a spring mechanism which produces an elastic pressure oriented perpendicular to the length of said gas sensor to clamp said clamping members together.

**15.** A gas sensor as set forth in claim 14, wherein said spring mechanism is made up of two or more springs.

**16.** A gas sensor as set forth in claim 10, wherein said clamping members have electrical insulation properties.

# FIG. 1

BASE SIDE

41

4

42

113

112 ⎫
111 ⎬ 11

51

61 ⎫
   ⎬ 3
62 ⎭

31

32

1

221 ⎫
21  ⎬ 22
222 ⎭

101

2

10

102

200

109

29

HEAD SIDE

# FIG. 2

## FIG. 3(a)

## FIG. 3(b)

# FIG. 4(a)

329 329 321 321 32 320

# FIG. 4(b)

320 321 321

# FIG. 5

# FIG. 6(a)

# FIG. 6(b)

## FIG. 7

RADIUS DIRECTION OF GAS SENSOR

# FIG. 8

## FIG. 9(a)

601

600

61

## FIG. 9(b)

600

601

61

## FIG. 10

61
(62)

605

606

605

## FIG. 11(a)

51

50

500

504

502

503

505

## FIG. 11(b)

505

503

# FIG. 12

# FIG. 13

51

500

50

500

502

501

## FIG. 14(a)

51

50

507

502

501

## FIG. 14(b)

50

507

508

# FIG. 15

LOAD (N)

FLEXTURE (mm)

# FIG. 16

319

K1

K1

a

b

31

319

# FIG. 17

# FIG. 18

# FIG. 19

# FIG. 20

# FIG. 21

**European Patent Office**

## EUROPEAN SEARCH REPORT

Application Number

EP 03 01 9485

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 298 02 115 U (ROBERT BOSCH) 15 July 1999 (1999-07-15) * page 2, line 5 – page 4, line 27; figure 4 * | 1 | G01N27/407 |
| X | WO 01 34951 A (KUISELL RICHARD C ;DELPHI TECH INC (US); DUCE RICHARD W (US); MCCA) 17 May 2001 (2001-05-17) * abstract * * page 5, line 4 – line 22 * * page 9, line 12 – line 26; figure 2 * * page 4, line 23 * | 7,10 | |
| A | PATENT ABSTRACTS OF JAPAN vol. 2002, no. 10, 10 October 2002 (2002-10-10) & JP 2002 168825 A (NGK SPARK PLUG CO LTD), 14 June 2002 (2002-06-14) * abstract * | 1-16 | |
| A | PATENT ABSTRACTS OF JAPAN vol. 2002, no. 10, 10 October 2002 (2002-10-10) & JP 2002 168824 A (NGK SPARK PLUG CO LTD), 14 June 2002 (2002-06-14) * abstract * | 1-16 | TECHNICAL FIELDS SEARCHED (Int.Cl.7) G01N |

The present search report has been drawn up for all claims

| Place of search | Date of completion of the search | Examiner |
|---|---|---|
| THE HAGUE | 26 November 2003 | Kempf, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 394 536 A1**

### ANNEX TO THE EUROPEAN SEARCH REPORT
### ON EUROPEAN PATENT APPLICATION NO.

EP 03 01 9485

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2003

| Patent document cited in search report | | | Publication date | Patent family member(s) | | Publication date |
|---|---|---|---|---|---|---|
| DE 29802115 | U | | 02-06-1999 | DE | 29802115 U1 | 02-06-1999 |
| WO 0134951 | A | | 17-05-2001 | EP | 1228363 A2 | 07-08-2002 |
| | | | | WO | 0134951 A2 | 17-05-2001 |
| JP 2002168825 | A | | 14-06-2002 | NONE | | |
| JP 2002168824 | A | | 14-06-2002 | NONE | | |

For more details about this annex : see Official Journal of the European Patent Office, No. 12/82